(19) **Europäisches Patentamt**
**European Patent Office**
**Office européen des brevets**

(11) **EP 4 099 462 B1**

(12) **EUROPEAN PATENT SPECIFICATION**

(45) Date of publication and mention
of the grant of the patent:
**04.06.2025 Bulletin 2025/23**

(51) International Patent Classification (IPC):
*H01B 1/20* (2006.01)        *H01M 10/052* (2010.01)
*H01M 10/0562* (2010.01)      *H01M 10/0565* (2010.01)
*H01M 10/0585* (2010.01)      *H01M 4/13* (2010.01)
*H01M 4/62* (2006.01)         *H01M 10/056* (2010.01)
*H01M 10/42* (2006.01)        *H01M 10/0525* (2010.01)
*H01M 50/414* (2021.01)       *H01M 50/423* (2021.01)
*H01M 50/434* (2021.01)       *H01M 50/446* (2021.01)
*H01M 50/497* (2021.01)

(21) Application number: **21747828.8**

(22) Date of filing: **27.01.2021**

(52) Cooperative Patent Classification (CPC):
**H01M 10/052; H01B 1/20; H01M 10/0562;**
**H01M 10/4235; H01M 50/414; H01M 50/423;**
**H01M 50/434; H01M 50/446; H01M 50/497;**
H01M 2300/0068; Y02E 60/10; Y02P 70/50

(86) International application number:
**PCT/JP2021/002777**

(87) International publication number:
**WO 2021/153594 (05.08.2021 Gazette 2021/31)**

(54) **LAMINATE**

LAMINAT

STRATIFIÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **31.01.2020 JP 2020015454**

(43) Date of publication of application:
**07.12.2022 Bulletin 2022/49**

(73) Proprietor: **SUMITOMO CHEMICAL COMPANY,**
**LIMITED**
**Tokyo 103-6020 (JP)**

(72) Inventors:
• **SUZUKI, Junji**
  **Osaka-shi, Osaka 554-8558 (JP)**
• **MURAKAMI, Chikara**
  **Niihama-shi, Ehime 792-8521 (JP)**

(74) Representative: **Vossius & Partner**
**Patentanwälte Rechtsanwälte mbB**
**Siebertstraße 3**
**81675 München (DE)**

(56) References cited:
**EP-A1- 3 389 129      WO-A1-2016/031961**
**JP-A- 2011 187 274    JP-A- 2014 096 290**
**JP-A- 2018 206 755    JP-A- 2019 110 111**
**JP-A- H10 241 663**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a laminated body. The present invention also relates to an all-solid-state secondary battery, a method for producing the all-solid-state secondary battery, a short circuit prevention film, and a method for preventing a short circuit in the all-solid-state secondary battery.

Background Art

An all-solid-state secondary battery is a secondary battery in which a solid electrolyte is employed as an electrolyte. Solid electrolytes fall roughly into an inorganic solid electrolyte and an organic solid electrolyte. In order for both of the inorganic and organic solid electrolytes to be put into practical use, research and development is proceeding. Patent Literature 1 provides an example of an all-solid-state secondary battery in which an inorganic solid electrolyte is used. Patent Literature 2 provides an example of an all-solid-state secondary battery in which an organic solid electrolyte is used. [Patent Literature 3] discloses a solid electrolyte-containing layer comprising an inorganic solid electrolyte comprising a LPS - a sulfide-based inorganic solid electrolyte.

Citation List

[Patent Literature]

[Patent Literature 1]
Japanese Patent Application Publication, Tokukai, No. 2019-199394
[Patent Literature 2]
Japanese Patent Application Publication, Tokukai, No. 2019-102301
[Patent Literature 3]
International Patent Application WO2017/099248 A1

Summary of Invention

Technical Problem

The above related art has room for improvement in terms of preventing a short circuit between electrodes and achieving stable voltage output.
It is an object of an aspect of the present invention to provide a laminated body in which a short circuit caused by the formation of a dendrite is prevented and which achieves stable voltage output.

Solution to Problem

The inventors of the present invention found that the foregoing problem can be solved by use of a layer containing a heat-resistant resin and an ion-conductive material. That is, the present invention includes the following features.

<1> A laminated body, including: a solid electrolyte layer; and a layer containing a heat-resistant resin and an ion-conductive material,
the solid electrolyte layer and the layer containing the heat-resistant resin and the ion-conductive material being adjacent to each other.
<2> The laminated body as set forth in <1>, wherein the heat-resistant resin has a glass-transition temperature of not less than 200°C.
<3> The laminated body as set forth in <1> or <2>, wherein the ion-conductive material is at least one selected from the group consisting of an ionic liquid, a mixture of an ionic liquid and a lithium salt, and a polymer electrolyte.
<4> The laminated body as set forth in any one of <1> through <3>, wherein a solid electrolyte contained in the solid electrolyte layer is an inorganic solid electrolyte.
<5> The laminated body as set forth in <4>, wherein the inorganic solid electrolyte is an oxide-based solid electrolyte or a sulfide-based solid electrolyte.
<6> An all-solid-state secondary battery, including: a positive electrode; a laminated body recited in any one of <1> through <5>; and a negative electrode,
the layer containing the heat-resistant resin and the ion-conductive material being disposed between the negative electrode and the solid electrolyte layer.

<7> A short circuit prevention film, containing: a heat-resistant resin; and an ion-conductive material,
the ion-conductive material being at least one selected from the group consisting of an ionic liquid, a mixture of an ionic liquid and a lithium salt, and a polymer electrolyte.

<8> A method for producing an all-solid-state secondary battery recited in <6>, the method including the step of:
disposing, between the solid electrolyte layer and the negative electrode, the layer containing the heat-resistant resin and the ion-conductive material.

<9> A method for preventing a short circuit in an all-solid-state secondary battery, the method including the step of:
disposing, between a positive electrode and a negative electrode, a laminated body recited in any one of <1> through <4> or a short circuit prevention film recited in <7>.

Advantageous Effects of Invention

With an aspect of the present invention, it is possible to provide a laminated body in which a short circuit caused by the formation of a dendrite is prevented and which achieves stable voltage output.

Brief Description of Drawings

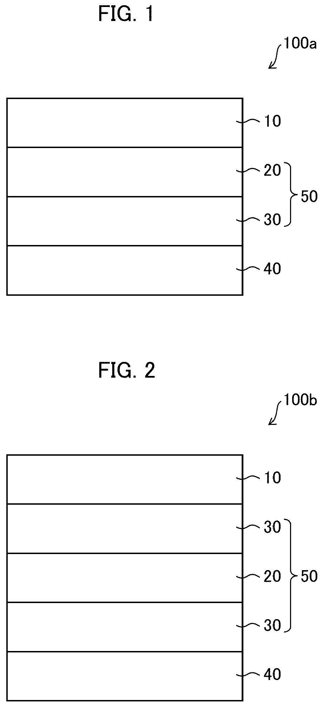

Fig. 1 is a schematic diagram of a laminated body and an all-solid-state secondary battery in accordance with an embodiment of the present invention.
Fig. 2 is a schematic diagram of a laminated body and an all-solid-state secondary battery in accordance with another embodiment of the present invention.

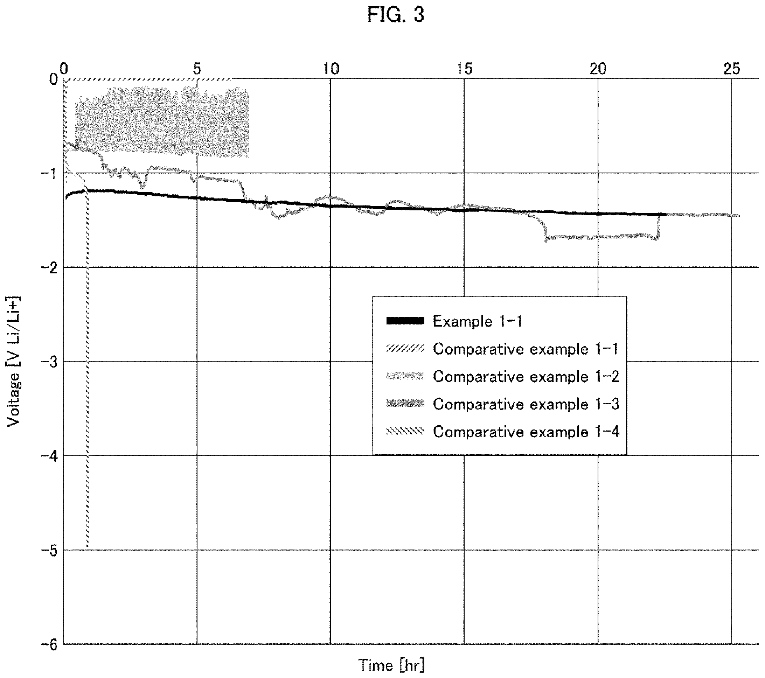

Fig. 3 is a graph illustrating a result of a dendrite resistance test of an all-solid-state secondary battery including a laminated body in accordance with an embodiment of the present invention. In the laminated body, an aramid is used as a heat-resistant resin, and a polymer electrolyte is used as an ion-conductive material.

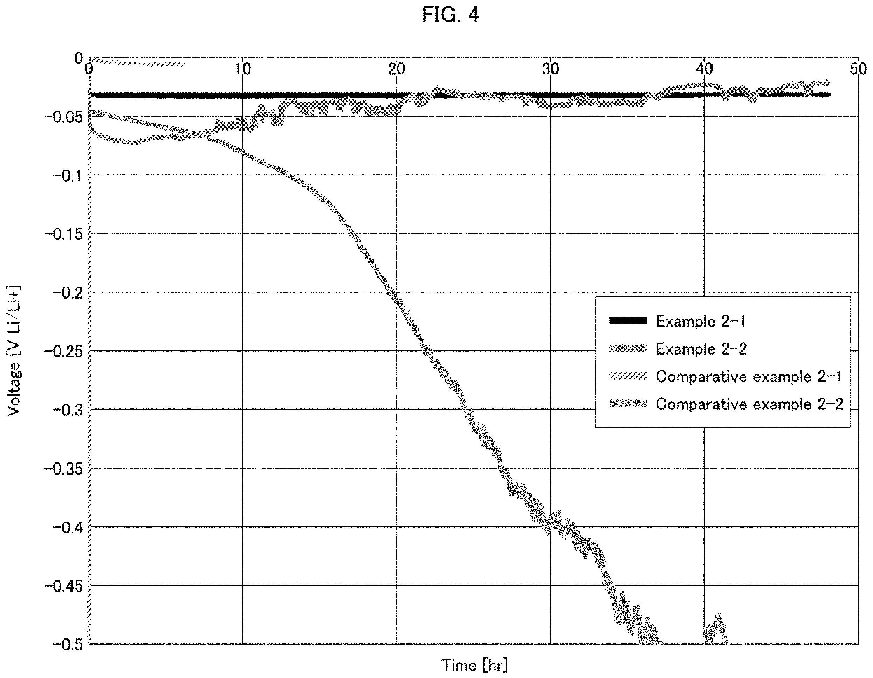

Fig. 4 is a graph illustrating a result of a dendrite resistance test of an all-solid-state secondary battery including a laminated body in accordance with an embodiment of the present invention. In the laminated body, an aramid is used as a heat-resistant resin, and an ionic liquid is used as an ion-conductive material.

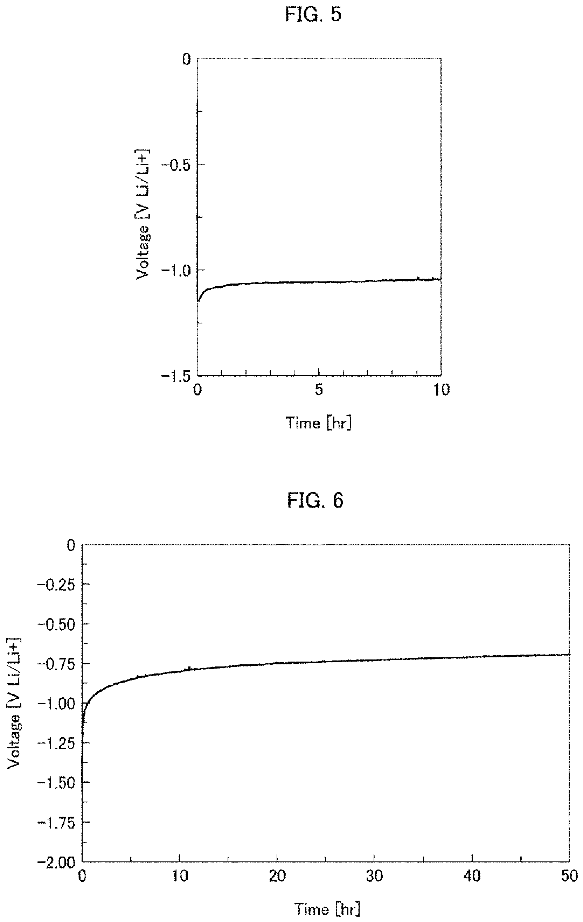

Fig. 5 is a graph illustrating a result of a dendrite resistance test of an all-solid-state secondary battery including a laminated body in accordance with an embodiment of the present invention. In the laminated body, an aramid and an aromatic polyester are used as a heat-resistant resin, and a polymer electrolyte is used as an ion-conductive material.
Fig. 6 is a graph illustrating a result of a dendrite resistance test of an all-solid-state secondary battery including a laminated body in accordance with an embodiment of the present invention. In the laminated body, an aramid and an aromatic polyester are used as a heat-resistant resin, and an ionic liquid is used as an ion-conductive material.

Description of Embodiments

The following description will discuss embodiments of the present invention. However, the present invention is not limited thereto.

A numerical expression "A to B" herein means "not less than A and not more than B" unless otherwise noted.

[1. Laminated body]

Reference will be made to Figs. 1 and 2. A laminated body 50 includes a solid electrolyte layer 20 and a layer 30 that contains a heat-resistant resin and an ion-conductive material. The solid electrolyte layer 20 and the layer 30 containing the heat-resistant resin and the ion-conductive material are adjacent to each other. That is, the laminated body 50 is a laminated body in which the layer 30 containing the heat-resistant resin and the ion-conductive material is formed on one surface or both surfaces of the solid electrolyte layer 20. Note that at least one of the layer(s) 30 containing the heat-resistant resin and the ion-conductive material is provided between the solid electrolyte layer 20 and a negative electrode 40 (on a side of the laminated body 50 which side is in contact with the negative electrode 40). In an embodiment, the laminated body 50 is a member which is part of an all-solid-state secondary battery.

Fig. 1 illustrates a laminated body 50 in which the layer 30 containing the heat-resistant resin and the ion-conductive material is formed on one surface of the solid electrolyte layer 20. Fig. 2 illustrates a laminated body 50 in which the layer 30 containing the heat-resistant resin and the ion-conductive material is formed on both surfaces of the solid electrolyte layer 20. From the viewpoint of reducing the size of an all-solid-state secondary battery, the layer 30 containing the heat-resistant resin and the ion-conductive material is preferably provided on one surface of the solid electrolyte layer 20 (that is, an all-solid-state secondary battery 100a is a preferable aspect).

In an all-solid-state secondary battery in which a solid electrolyte is used as an electrolyte, there is a problem of the formation of a dendrite. Specifically, metal (e.g., metallic lithium) is dendritically deposited, typically on a negative electrode side, as a charge-discharge cycle or a constant-voltage charge is performed. This dendritic metal (dendrite) grows from the negative electrode side to a positive electrode side along the grain boundaries of the solid electrolyte. This causes a problem of a short circuit between the positive electrode and the negative electrode. In the present invention, this problem is solved by providing the layer 30 containing the heat-resistant resin and the ion-conductive material.

All-solid-state secondary batteries, in which a flammable organic solvent is not used as an electrolyte, have a low risk of ignition and combustion and are intrinsically highly safe. For this reason, a cooling system is considered unnecessary for solid-state secondary batteries, unlike conventional liquid-based secondary batteries. All-solid-state secondary batteries are therefore intended for use under higher temperature. Another intended case is that all-solid-state secondary batteries are used while being externally heated by using a heat generator, such as a heater, so that the ion conductivity of the solid electrolyte is increased. In this case, the inside of the all-solid-state secondary battery is affected also by heat generated by charging and discharging and can be in a high-temperature environment (approximately 150°C or higher). When a resin layer is provided between the solid electrolyte layer 20 and the negative electrode 40 in such a high-temperature environment, the resin softens or melts, or the resin layer itself deforms, unless the resin is heat-resistant. This makes it easy for dendrites to penetrate the resin layer. That is a new problem found by the inventors of the present invention. It is therefore desirable that a layer provided between the solid electrolyte layer 20 and the negative electrode 40 should not soften, melt, or deform even in a high-temperature environment.

In light of the above, in the present invention, the layer 30 containing the heat-resistant resin and the ion-conductive material is provided between the solid electrolyte layer 20 and the negative electrode 40. The layer 30 containing the heat-resistant resin and the ion-conductive material does not easily soften, melt, or deform even in a high-temperature environment, due to containing the heat-resistant resin. This solves the foregoing problem. The layer 30 containing the heat-resistant resin and the ion-conductive material prevents a short circuit between the electrodes by physically inhibiting a dendrite formed at the negative electrode 40. Further, since the solid electrolyte layer 20 and the negative electrode 40 are not in direct contact with each other, the negative electrode 40 forms a good interface. This makes it possible to reduce the formation of a nucleus of a dendrite on the surface of the negative electrode 40.

The heat-resistant resin has a glass-transition temperature preferably of not less than 200°C and more preferably of not less than 250°C. When the heat-resistant resin has a glass-transition temperature of not less than 200°C, it is possible to further prevent melting, softening, and deformation of the layer 30 containing the heat-resistant resin and the ion-conductive material even when the insides of the all-solid-state secondary batteries 100a and 100b are in a high-temperature environment as described above.

The inventors of the present invention have also found a problem that, when a layer containing only the heat-resistant resin is provided between the solid electrolyte layer 20 and the negative electrode 40, the ion conductivity is reduced so that the all-solid-state secondary batteries 100a and 100b suffer decreased and/or unstable voltage output. Thus, in the present invention, a layer containing both the heat-resistant resin and the ion-conductive material, i.e., the layer 30 containing the heat-resistant resin and the ion-conductive material is provided.

To summarize the above, the all-solid-state secondary batteries 100a and 100b, each of which includes the layer 30 containing the heat-resistant resin and the ion-conductive material, are considered to be batteries in which a short circuit caused by a dendrite is prevented even in a high-temperature environment and which have sufficient ion conductivity and thus achieve stable voltage output. Whether or not a short circuit caused by a dendrite can be prevented in a high-temperature environment can be confirmed, for example, by a test described in Examples (described later).

[1.1. Layer containing heat-resistant resin and ion-conductive material]

The layer 30 containing the heat-resistant resin and the ion-conductive material contains the heat-resistant resin and the ion-conductive material. In addition to these, the layer 30 containing the heat-resistant resin and the ion-conductive material may contain another material (e.g. another resin).

When a polymer electrolyte (described later) is contained as the ion-conductive material, the layer 30 containing the heat-resistant resin and the ion-conductive material contains the heat-resistant resin in a weight proportion whose lower limit is preferably not less than 1 weight% and more preferably not less than 5 weight%. The upper limit of the weight proportion of the heat-resistant resin is preferably not more than 80 weight% and more preferably not more than 70 weight%. The layer 30 containing the heat-resistant resin and the ion-conductive material contains the ion-conductive material in a weight proportion whose lower limit is preferably not less than 20 weight% and more preferably not less than 30 weight%. The upper limit of the weight proportion of the ion-conductive material is preferably not more than 99 weight% and more preferably not more than 95 weight%. The above proportions are each relative to 100 weight% of a total amount of the heat-resistant resin and the ion-conductive material. When the heat-resistant resin and the ion-conductive material are each contained in any of the above proportions, a short circuit caused by the formation of a dendrite can be prevented even more reliably, and even more stable voltage output is achieved.

These lower limits and upper limits can be combined as appropriate. As a result of the combination, examples of the range of the weight proportion of the heat-resistant resin include: not less than 1 weight% and not more than 80 weight%; and not less than 5 weight% and not more than 50 weight%. As a result of the combination, examples of the range of the weight proportion of the ion-conductive material include: not less than 20 weight% and not more than 99 weight%; and not less than 30 weight% and not more than 95 weight%.

When an ionic liquid (described later) is contained as the ion-conductive material, the layer 30 containing the heat-resistant resin and the ion-conductive material contains the heat-resistant resin in a weight proportion whose lower limit is preferably not less than 1 weight% and more preferably not less than 2 weight%. The upper limit of the weight proportion of the heat-resistant resin is preferably not more than 99 weight% and more preferably not more than 90 weight%. The layer 30 containing the heat-resistant resin and the ion-conductive material contains the ion-conductive material in a weight proportion whose lower limit is preferably not less than 1 weight% and more preferably not less than 10 weight%. The upper limit of the weight proportion of the ion-conductive material is preferably not more than 99 weight% and more preferably not more than 98 weight%. When the heat-resistant resin and the ion-conductive material are each contained in any of the above proportions, a short circuit caused by the formation of a sufficient dendrite can be prevented even more reliably, and even more stable voltage output is achieved.

These lower limits and upper limits can be combined as appropriate. As a result of the combination, examples of the range of the weight proportion of the heat-resistant resin include: not less than 1 weight% and not more than 99 weight%; and not less than 2 weight% and not more than 90 weight%. As a result of the combination, examples of the range of the weight proportion of the ion-conductive material include: not less than 1 weight% and not more than 99 weight%; and not less than 10 weight% and not more than 98 weight%.

The layer 30 containing the heat-resistant resin and the ion-conductive material has a thickness whose lower limit is preferably not less than 5 μm and more preferably not less than 10 μm. The layer 30 containing the heat-resistant resin and the ion-conductive material has a thickness whose upper limit is preferably not more than 500 μm and more preferably not more than 250 μm. The upper limits and the lower limits of the thickness of the layer 30 containing the heat-resistant resin and the ion-conductive material may be combined. As a result of the combination, examples of the thickness include: not less than 5 μm and not more than 500 μm; not less than 10 μm and not more than 250 μm; and not less than 5 μm and not more than 250 pm.

The layer 30 containing the heat-resistant resin and the ion-conductive material has an ion conductivity (e.g., a lithium ion conductivity) whose lower limit is preferably not less than $1 \times 10^{-6}$ S/cm and more preferably not less than $1 \times 10^{-5}$ S/cm at 60°C. The upper limit of the ion conductivity of the layer 30 containing the heat-resistant resin and the ion-conductive material is, for example, not more than $1 \times 10^{-2}$ S/cm. The upper limits and the lower limits of the ion conductivity of the layer 30 containing the heat-resistant resin and the ion-conductive material may be combined. As a result of the combination, examples of the ion conductivity include: not less than $1 \times 10^{-6}$ S/cm and not more than $1 \times 10^{-2}$ S/cm; and not less than $1 \times 10^{-5}$ S/cm and not more than $1 \times 10^{-2}$ S/cm.

Examples of a method for measuring the ion conductivity of the layer 30 containing the heat-resistant resin and the ion-conductive material include a method in which an impedance method is used. Specifically, the measurement is carried out as follows.

1. A coin-type lithium battery CR2032 (which can be hereinafter referred to as a coin cell) is prepared by sandwiching a measurement sample between two blocking electrodes (e.g., electrodes made of SUS) in a dry argon atmosphere in a glove box.
2. The obtained coin cell is conditioned in a thermostatic chamber at 60°C for 12 hours.
3. Measurement is carried out by using an impedance measuring device at a desired temperature, for frequencies ranging from 0.1 Hz to 1 MHz and an amplitude of 10 mV. An ion conductivity σ is calculated from the following formula:

$$\sigma \ (\mathrm{S \cdot cm^{-1}}) = t \ (\mathrm{cm}) \times R \ (\Omega) \ / \ A \ (\mathrm{cm^2})$$

In this formula, R represents the value of an impedance. A represents the area of a sample, and t represents the thickness of the sample.

(Heat-resistant resin)

As used herein, the "heat-resistant resin" refers to a resin that does not soften, melt, or pyrolyze under a high-temperature environment. Here, the "high-temperature environment" refers to an environment where the temperature is 150°C. The heat-resistant resin has a glass-transition temperature preferably of not less than 200°C, more preferably of not less than 250°C, and even more preferably of not less than 300°C. The upper limit of the glass-transition temperature of the heat-resistant resin is not more than 450°C, for example. The upper limits and the lower limits of the glass-transition temperature of the heat-resistant resin may be combined. As a result, examples of the range of the glass-transition temperature include: not less than 200°C and not more than 450°C; not less than 250°C and not more than 450°C; and not less than 300°C and not more than 450°C. Such a resin does not soften, melt, or pyrolyze even when the all-solid-state secondary batteries 100a and 100b are used while being warmed without use of a cooling system.

Examples of the heat-resistant resin include polyamide, polyimide, polyamide imide, polycarbonate, polyacetal, polysulfone, polyphenylene sulfide, polyether ether ketone, aromatic polyester, polyether sulfone, polyetherimide, cellulose ethers, polybenzimidazole, polyurethane, and melamine resin. One of these heat-resistant resins may be used alone, or a mixture of two or more of these heat-resistant resins may be used.

Among the heat-resistant resins described above, polyamide, polyimide, polyamide imide, aromatic polyester, polyether sulfone, and polyetherimide are preferable, and polyamide, polyimide, and polyamide imide are more preferable, from the viewpoint of possession of higher heat resistance. Among polyamide, polyimide, and polyamide imide, a nitrogen-containing aromatic polymer is more preferable from the viewpoint of heat resistance. Examples of the nitrogen-containing aromatic polymer include an aromatic polyamide (a para-oriented aromatic polyamide, a meta-oriented aromatic polyamide, etc.), an aromatic polyimide, and an aromatic polyamide imide. Among these nitrogen-containing aromatic polymers, an aromatic polyamide is more preferable and a para-oriented aromatic polyamide is particularly preferable. As used herein, aromatic polyamide can be expressed as "aramid" and para-oriented aromatic polyamide can be expressed as "para-aramid".

A para-aramid is a heat-resistant resin obtained by condensation polymerization of a para-oriented aromatic diamine and a para-oriented aromatic dicarboxylic acid halide. Repeating units that constitute a substantial portion of a para-aramid each have amide bonds at para positions of an aromatic ring. Alternatively, the repeating units have amide bonds at quasi-para positions of an aromatic ring. Note that having amide bonds at the quasi-para positions of the aromatic ring indicates that two amide bonds extending from an aromatic ring are located in the same straight line or to be parallel to each other.

Specific examples of the para-aramid include poly(paraphenylene terephthalamide), poly(parabenzamide), poly(4,4'-benzanilide terephthalamide), poly(paraphenylene-4,4'-biphenylene dicarboxylic acid amide), poly(paraphenylene-2,6-naphthalene dicarboxylic acid amide), poly(2-chloro-paraphenylene terephthalamide), and a paraphenylene terephthalamide/2,6-dichloroparaphenylene terephthalamide copolymer.

Examples of the aromatic polyimide include a wholly aromatic polyimide produced by condensation polymerization of an aromatic tetracarboxylic dianhydride and an aromatic diamine. Examples of the aromatic tetracarboxylic dianhydride include pyromellitic dianhydride, 3,3',4,4'-diphenyl sulfone tetracarboxylic dianhydride, 3,3',4,4'-benzophenone tetracarboxylic dianhydride, 2,2'-bis(3,4-dicarboxyphenyl)hexafluoropropane dianhydride, and 3,3',4,4'-biphenyl tetracarboxylic dianhydride. Examples of the aromatic diamine include oxydianiline, paraphenylenediamine, benzophenone diamine, 3,3'-methylenedianiline, 3,3'-diaminobenzophenone, 3,3'-diaminodiphenyl sulfone, and 1,5'-naphthalene diamine.

Examples of the aromatic polyamide imide include a resin obtained by condensation polymerization of an aromatic dicarboxylic acid and aromatic diisocyanate and a resin obtained by condensation polymerization of an aromatic tricarboxylic acid anhydride and an aromatic diisocyanate. Examples of the aromatic dicarboxylic acid include isophthalic acid and terephthalic acid. Examples of the aromatic tricarboxylic acid anhydride include trimellitic anhydride. Examples of the aromatic diisocyanate include 4,4'-diphenylmethane diisocyanate, 2,4-tolylene diisocyanate, 2,6-tolylene diisocyanate, ortho tolylane diisocyanate, and m-xylene diisocyanate.

Among the heat-resistant resins exemplified above, the resin whose glass-transition temperature is not less than 200°C is, for example, an aromatic polyamide, an aromatic polyimide, an aromatic polyamide imide, an aromatic polyester, or a polyether sulfone.

(Ion-conductive material)

As used herein, the "ion-conductive material" refers to a substance whose ion conductivity for a specific ion (e.g. lithium ion) at 60°C is not less than $10^{-6}$ S/cm. Examples of the ion-conductive material include an ionic liquid, a mixture of an ionic liquid and a lithium salt, a polymer electrolyte, and an inorganic solid electrolyte. One of these ion-conductive materials may be used alone, or a combination of two or more of these ion-conductive materials may be used. Examples of a method for measuring the ion conductivity of the ion-conductive material include a method in which an impedance method is used. The specific measurement method has been described above.

The ionic liquid refers to a substance containing cations and anions and having a melting point of not more than 100°C (preferably a substance that is in a liquid state at room temperature (e.g., 25°C)). The cations contained in the ionic liquid are typically an organic cation (or may be a complex ion in which an organic ligand is coordinated to an inorganic cation). Examples of the cations include an ammonium-based cation (imidazolium salts, pyridinium salts, etc.), a phosphonium ion-based cation, an alkali metal cation, and an alkaline-earth metal cation. Examples of the anions include a halogen-based anion (bromide ion, etc.), a boron-based anion (tetrafluoroborate, etc.), a phosphorus-based anion (hexafluorophosphate, etc.), a sulfonylimide-based anion (bis(trifluoromethylsulfonyl)imide (TFSI), bis(fluorosulfonyl) imide (FSI), etc.). Examples of the organic ligand coordinated to an inorganic cation (e.g., lithium ion) include triglyme and tetraglyme. The ionic liquid may be a mixture of a lithium salt and a non-ionic organic ligand. For example, the ionic liquid is a mixture of a lithium salt and tetraglyme. In this case, cations contained in the ionic liquid are lithium-containing complex ions, and anions contained in the ionic liquid are anions originally contained in the lithium salt.

Examples of the lithium salt include lithium hexafluorophosphate ($LiPF_6$), lithium tetrafluoroborate ($LiBF_4$), lithium perchlorate ($LiClO_4$), lithium bis(fluorosulfonyl)imide (LiFSI: $LiN(SO_2F)_2$), lithium bis(trifluoromethylsulfonyl)imide (LiTFSI: $LiN(SO_2CF_3)_2$), lithium bis(perfluoroethylsulfonyl)imide ($LiN(SO_2C_2F_5)_2$), $LiAsF_6$, $LiCF_3SO_3$, and lithium di-fluoro(oxalato)borate.

Examples of the lithium salt in the mixture of the ionic liquid and the lithium salt include the lithium salts described above.

The polymer electrolyte refers to a mixture of a polymer compound having a polarity in the molecule thereof and a lithium salt. Specifically, the polymer electrolyte refers to an electrolyte obtained by dissolving a lithium salt in a polymer compound having a polarity in the molecule thereof. Specific examples of the polymer electrolyte include compounds listed as examples in (Organic solid electrolyte) in the section [1.2.].

The layer containing the heat-resistant resin and the ion-conductive material may contain an inorganic solid electrolyte. Examples of the inorganic solid electrolyte include a sulfide-based solid electrolyte, an oxide-based solid electrolyte, and a nitride-based solid electrolyte. Specific examples of the inorganic solid electrolyte include compounds listed as examples in (Inorganic solid electrolyte) in the section [1.2.]. The layer 30 containing the heat-resistant resin and the ion-conductive material, which layer 30 contains the inorganic solid electrolyte, preferably further contains at least one selected from the group consisting of an ionic liquid, a mixture of an ionic liquid and a lithium salt, and a polymer electrolyte. This configuration enables a further increase in ion conductivity.

[1.1.1. Aspect and production method of layer containing heat-resistant resin and ion-conductive material]

There can be various aspects of the layer 30 containing the heat-resistant resin and the ion-conductive material. For example, in the layer 30 containing the heat-resistant resin and the ion-conductive material, the heat-resistant resin may be uniformly distributed or may be localized. Examples of the former case include a layer in which a porous base material containing the heat-resistant resin is impregnated with, or caused to support, the ion-conductive material. Examples of the latter case include a layer in which a porous base material, in which the heat-resistant resin and another resin form a laminated body, is impregnated with, or caused to support, the ion-conductive material. The ion-conductive material is preferably uniformly distributed in the layer 30 containing the heat-resistant resin and the ion-conductive material.

The following methods (a), (b), (c), and (d) exemplify a method for producing the layer 30 containing the heat-resistant resin and the ion-conductive material.

(a) A porous base material (porous film, nonwoven fabric, etc.) containing the heat-resistant resin is impregnated with, or caused to support, the ion-conductive material to obtain the layer 30 containing the heat-resistant resin and the ion-conductive material. From the viewpoint of reducing the thickness of the layer 30 containing the heat-resistant resin and the ion-conductive material, the porous base material is preferably a porous film.

(b) A porous base material (a porous film in which the heat-resistant resin and another resin form a laminated body; a nonwoven fabric in which the heat-resistant resin and another resin are blended; etc.) containing the heat-resistant resin and another substance is impregnated with, or caused to support, the ion-conductive material to obtain the layer 30 containing the heat-resistant resin and the ion-conductive material. For the same reason as in (a), the porous base material is preferably a porous film.

(c) A film of a mixture containing the heat-resistant resin and the ion-conductive material is formed to obtain the layer 30 containing the heat-resistant resin and the ion-conductive material. Examples of a method for forming the film include a wet method in which a solvent is used, and a dry method in which the mixture is subjected to pressure-bonding.

(d) The ion-conductive material is bound by the heat-resistant resin to obtain the layer 30 containing the heat-resistant resin and the ion-conductive material. Examples of such a method include a method in which an inorganic solid electrolyte is bound by the heat-resistant resin. Preferable examples of such a method include a method in which an inorganic solid electrolyte is bound by the heat-resistant resin and then at least one selected from the group consisting of an ionic liquid, a mixture of an ionic liquid and a lithium salt, and a polymer electrolyte is added.

The term "porous base material" in each of the above-described aspects (a) and (b) refers to a material that has a large number of pores and is therefore capable of transmitting a gas or a liquid from one face thereof to another face. The diameter of the pores of the porous base material is not limited to any particular value, but is preferably not more than 0.3 $\mu$m, and more preferably not more than 0.14 $\mu$m. The weight per unit area of the porous film is not limited to any particular value, but is preferably 4 g/m$^2$ to 20 g/m$^2$, more preferably 4 g/m$^2$ to 12 g/m$^2$, and even more preferably 5 g/m$^2$ to 12 g/m$^2$. The air permeability of the porous base material is preferably 30 sec/100 mL to 500 sec/100 mL and more preferably 50 sec/100 mL to 300 sec/100 mL in terms of Gurley values measured in conformity with JIS P8117.

The "porous base material containing a heat-resistant resin and another substance" in the above-described production method (b) may further contain a filler or the like. The material of the filler may be a conventionally, publicly known material (alumina, etc.).

Examples of the "another resin" in the above-described aspect (b) include polyolefin. Specific examples of the polyolefin include a homopolymer and a copolymer obtained by polymerizing (or copolymerizing) a monomer(s) such as ethylene, propylene, 1-butene, 4-methyl-1-pentene, and/or 1-hexene. Examples of such a homopolymer include polyethylene, polypropylene, and polybutene. Examples of such a copolymer include an ethylene-propylene copolymer. Among these resins, polyethylene is preferable. Examples of the polyethylene include low-density polyethylene, high-density polyethylene, linear polyethylene (an ethylene-a-olefin copolymer), and ultra-high molecular weight polyethylene having a weight-average molecular weight of not less than 1,000,000. Among these kinds of polyethylene, ultra-high molecular weight polyethylene is particularly preferable.

[1.1.2. Short circuit prevention film]

In an embodiment, the layer 30 containing the heat-resistant resin and the ion-conductive material can be a short circuit prevention film. As used herein, the "short circuit prevention film" refers to the layer 30 containing the heat-resistant resin and the ion-conductive material and having a function to prevent a short circuit. Whether the layer 30 containing the heat-resistant resin and the ion-conductive material has a function to prevent a short circuit (i.e., whether the layer 30 containing the heat-resistant resin and the ion-conductive material is a short circuit prevention film) can be determined by the following procedure.

1. A coin-type lithium battery CR2032 is used as a cell to be evaluated (which can be hereinafter referred to as a coin cell) and is subjected to the following dendrite resistance test.
2. At the point in time when 20 hours elapse after the test starts, a coin cell whose voltage has exhibited a substantially constant, negative voltage is taken apart, and the solid electrolyte layer is taken out.
3. The surface of the solid electrolyte layer having been taken out is observed. A solid electrolyte layer having less than 10 black points (i.e., dendrite evidences) present on the surface thereof is judged to be the short circuit prevention film in the present invention.

(Dendrite resistance test)

A laminated body under test which is as follows is prepared with use of a coin cell. While an electric current is passed through this laminated body at a density of 0.10 mA/cm$^2$ so that metal Li is continuously deposited on the negative electrode side, a change in voltage over time is observed. The test is conducted at a temperature of 60°C.

The layer configuration of the laminated body under test is as follows.

· Stainless steel plate, thickness: 500 $\mu$m, diameter: 15.5 mm
· Metallic lithium foil on a dissolution side (positive electrode), thickness: 500 $\mu$m, diameter: 13 mm
· Solid electrolyte layer (e.g., a sintered body of $Li_{6.75}La_3Zr_{1.75}Nb_{0.25}O_{12}$, the sintered body having a thickness of 500 $\mu$m and a diameter of 15 mm, available from TOSHIMA Manufacturing Co., Ltd.)
· Layer 30 (short circuit prevention film) containing a heat-resistant resin and an ion-conductive material, diameter: 16 mm
· Metallic lithium foil on a deposition side (negative electrode), thickness: 500 $\mu$m, diameter: 13 mm

In the dendrite resistance test, when no short circuit occurs and metal lithium is stably deposited on the negative electrode, the coin cell exhibits a substantially constant, negative voltage. Meanwhile, when the coin cell is completely short-circuited due to a dendrite, the voltage of the coin cell becomes 0 V. Further, when a micro short circuit (micro short) is repeated due to dendrites, the voltage of the coin cell heavily varies between 0 V and a negative value.

The number of dendrite evidences present on the surface of the solid electrolyte layer being less than 10 after the dendrite resistance test indicates that the layer 30 (short circuit prevention film) containing the heat-resistant resin and the ion-conductive material inhibits the growth of a dendrite and the entry of the dendrite into the solid electrolyte layer is thus prevented.

For example, in the Examples (described later), a "film obtained by impregnating, with an ion-conductive material, a heat-resistant resin-polyethylene laminated film in which a heat-resistant resin and polyethylene form a laminated body" is used. When this film was subjected to the above dendrite resistance test, the coin cell stably exhibited a constant, negative voltage (approximately -1.5 V) even after 20 hours from the start of the test. In addition, when the coin cell which has been subjected to the test was taken apart and the surface of the solid electrolyte layer was observed, no black dendrite evidence was present. These results indicate that a "film obtained by impregnating, with an ion-conductive material, a heat-resistant resin-polyethylene laminated film in which a heat-resistant resin and polyethylene form a laminated body" is a short circuit prevention film.

The short circuit prevention film is preferably the layer 30 containing the heat-resistant resin and the ion-conductive material and capable of being treated as a sheet-shaped object by itself in the production stage of the all-solid-state secondary batteries 100a and 100b. Such a short circuit prevention film is capable of being distributed so as to serve as a member of the laminated body 50 or of the all-solid-state secondary batteries 100a and 100b or serve as a product or a half-finished product by itself.

An aspect in which the layer 30 containing the heat-resistant resin and the ion-conductive material is a sheet-shaped short circuit prevention film has the following advantages to name a few.

(1) Material handleability is good. This facilitates the production of the all-solid-state secondary batteries 100a and 100b.

(2) It is possible to use, in a laminated body, a short circuit prevention film excellent in thickness uniformity and free of defects such as pinholes. In this case, it is therefore possible to obtain more excellent short circuit prevention properties than in a case of using another method (e.g. a method of applying and drying a solution, such as a method (y) which will be described later).

(3) Unlike a method of applying/drying a solution, such as the method (y) which will be described later, no solvent is used. This eliminates the possibility of the deterioration of the solid electrolyte caused by the solvent. Further, a step of removing the solvent is eliminated. This also eliminates the possibility of the deterioration of the solid electrolyte caused by heating etc. carried out for removal of the solvent.

An aspect of the present invention is a short circuit prevention film containing a heat-resistant resin and an ion-conductive material. In other words, an aspect of the present invention is use of a film containing a heat-resistant resin and an ion-conductive material for prevention of a short circuit in an all-solid-state secondary battery (this film can be a member which is part of the laminated body 50).

[1.2. Solid electrolyte layer]

The solid electrolyte layer 20 contains at least a solid electrolyte. The solid electrolyte layer 20 is a layer different from the layer 30 containing the heat-resistant resin and the ion-conductive material. For example, the weight proportion of the heat-resistant resin in the solid electrolyte layer 20 is less than 1 weight%.

The solid electrolyte layer 20 has a thickness whose lower limit is, for example, not less than 5 $\mu$m and whose upper limit is, for example, not more than 500 $\mu$m. The upper limits and the lower limits of the thickness of the solid electrolyte layer 20 may be combined. As a result of the combination, examples of the range of the thickness include: not less than 5 $\mu$m and not more than 500 $\mu$m.

The solid electrolyte layer 20 has an ion conductivity (e.g., lithium ion conductivity) at 25°C of, for example, preferably not less than $1 \times 10^{-5}$ S/cm, and more preferably not less than $1 \times 10^{-4}$ S/cm. The upper limit of the ion conductivity (e.g., lithium ion conductivity) at 25°C of the solid electrolyte layer 20 is, for example, not more than $1 \times 10^{-2}$ S/cm. The lower limits and the upper limits of the ion conductivity (e.g., lithium ion conductivity) of the solid electrolyte layer 20 may be combined. As a result of the combination, examples of the range of the ion conductivity include: not less than $1 \times 10^{-5}$ S/cm and not more than $1 \times 10^{-2}$ S/cm; and not less than $1 \times 10^{-4}$ S/cm and not more than $1 \times 10^{-2}$ S/cm.

Examples of a method for measuring the lithium ion conductivity of the solid electrolyte layer 20 at 25°C include a method in which an impedance method is used. Specifically, the measurement is carried out as follows.

1. A coin-type lithium battery CR2032 (which can be hereinafter referred to as a coin cell) is prepared by sandwiching a measurement sample between two blocking electrodes (e.g., electrodes made of SUS) in a dry argon atmosphere in a glove box.

2. The obtained coin cell is conditioned in a thermostatic chamber at 25°C for 12 hours.

3. Measurement is carried out by using an impedance measuring device at 25°C, for frequencies ranging from 0.1 Hz to 1 MHz and an amplitude of 10 mV. An ion conductivity $\sigma$ is calculated from the following formula:

$$\sigma \ (S \cdot cm^{-1}) \ = \ t \ (cm) \ \times \ R \ (\Omega) \ / \ A \ (cm^2)$$

In this formula, R represents the value of an impedance. A represents the area of a sample, and t represents the thickness of the sample.

The solid electrolyte contained in the solid electrolyte layer 20 may be an inorganic solid electrolyte or may be an organic solid electrolyte. Examples of the inorganic solid electrolyte include a sulfide-based solid electrolyte, an oxide-based solid electrolyte, and a nitride-based solid electrolyte. Examples of the organic solid electrolyte include a polymer electrolyte and a gel electrolyte.

Among these solid electrolytes, a dendrite is likely to form along the grain boundaries of electrolyte particles of the sulfide-based solid electrolyte and the oxide-based solid electrolyte. Providing the layer 30 containing the heat-resistant resin and the ion-conductive material makes it possible, even when a sulfide-based solid electrolyte or an oxide-based solid electrolyte is used as the solid electrolyte layer 20, to reduce dendrites and therefore prevent a short circuit between the electrodes caused by the formation of a dendrite. Further, a sulfide-based solid electrolyte has a risk of generating a poisonous gas, such as hydrogen sulfide, when being exposed to the atmosphere, whereas an oxide-based solid electrolyte does not have such a risk. It is therefore preferable to use an oxide-based solid electrolyte as the inorganic solid electrolyte, from the viewpoint of the safety of the all-solid-state secondary battery.

(Inorganic solid electrolyte)

The sulfide-based solid electrolyte typically contains the lithium element and the sulfur element. The sulfide-based solid electrolyte preferably further contains one or more elements selected from the group consisting of the phosphorus element, the germanium element, the tin element, and the silicon element. The sulfide-based solid electrolyte may contain one or more elements selected from the group consisting of the oxygen element and halogen elements (e.g., the fluorine element, the chlorine element, the bromine element, the iodine element).

Examples of the sulfide-based solid electrolyte include $Li_2S\text{-}P_2S_5$, $Li_2S\text{-}P_2S_5\text{-}GeS_2$, $Li_2S\text{-}P_2S_5\text{-}SnS_2$, $Li_2S\text{-}P_2S_5\text{-}SiS_2$, $Li_2S\text{-}P_2S_5\text{-}LiI$, $Li_2S\text{-}P_2S_5\text{-}LiI\text{-}LiBr$, $Li_2S\text{-}P_2S_5\text{-}Li_2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_n$ (m and n are positive numbers, and Z is Ge, Zn, or Ga), $Li_2S\text{-}GeS_2$, $Li_2S\text{-}SiS_2\text{-}Li_3PO_4$, and $Li_2S\text{-}SiS_2\text{-}Li_xMO_y$ (x and y are positive numbers, and M is P, Si, Ge, B, Al, Ga, or In). Here, the expression "A-B" means a "material made by using a raw material composition containing A and B". For example, the expression "$Li_2S\text{-}P_2S_5$" means a "material made by using a raw material composition containing $Li_2S$ and $P_2S_5$".

Examples of the oxide-based solid electrolyte include: a NASICON-type solid electrolyte (e.g., $LiTi_2(PO_4)_3$ and an element-substitution product thereof ($Li_{1+x}Al_xTi_{2-x}(PO_4)_3$, $Li_{1+x+y}Al_xTi_{2-x}P_{3-y}Si_yO_{12}$, and the like)); a perovskite-type solid electrolyte (e.g., $(LaLi)TiO_3$ and $La_{1-3x}Li_{3x}TiO_3$); a LISICON-type solid electrolyte (e.g., $Li_4SiO_4$ and $LiGeO_4$, and an element-substitution product thereof (for example, $Li_{4-2x}Zn_xGeO_4$ (e.g., $Li_{14}ZnGe_4O_{16}$)); a glass ceramic-type solid electrolyte (e.g., $Li_{1.5}Al_{0.5}Ge_{1.5}(PO_4)_3$); $Li_3N$ and a H-substitution product thereof; and $Li_3PO_4$ and a N-substitution product thereof (e.g., $Li_{2.0}PO_{3.3}N_{0.46}$ (LIPON)).

Examples of the oxide-based solid electrolyte also include a garnet-type solid electrolyte having a garnet-type crystal structure. A garnet-type solid electrolyte has high lithium ion conductivity and is stable with respect to, for example, water, oxygen, and lithium metal.

A garnet-type solid electrolyte can take a cubic crystal structure. Examples of the garnet-type solid electrolyte include a composite oxide containing Li, La, and Zr and a composite oxide containing Li, La, and Zr. The garnet-type solid electrolyte may contain one or more substitution elements selected from the group consisting of Al, Mg, Ca, Sr, Ba, Ta, Nb, and Yb. More specific examples include $Li_7La_3Zr_2O_{12}$ (LLZ) $Li_6La_3Ta_{1.5}Y_{0.5}O_{12}$ (LLTY), and $Li_6BaLa_2Ta_2O_{12}$ (LBLT). Examples of an element-substitution product of LLZ include $Li_{7-3x}Al_xLa_3Zr_2O_{12}$ and $Li_{7-x}La_3Zr_{2-y}M_yO_{12}$ (M is a pentavalent element such as Nb or Ta).

The inorganic solid electrolyte may be glass, may be glass ceramic, or may be a crystal material. Glass is obtained by subjecting a raw material composition (e.g., a mixture of $Li_2S$ and $P_2S_5$) to amorphization treatment. Examples of the amorphization treatment include mechanical milling. Glass ceramic is obtained by subjecting glass to heat treatment. A crystal material is obtained by, for example, subjecting a raw material composition to solid-state reaction treatment.

The inorganic solid electrolyte is preferably in a pellet form. The inorganic solid electrolyte in a pellet form has a thickness preferably of not more than 1 mm, and more preferably of not more than 500 $\mu$m. The lower limit of the thickness of the inorganic solid electrolyte is not less than 5 $\mu$m, for example. The upper limits and the lower limits of the thickness of the inorganic solid electrolyte may be combined. As a result of the combination, examples of the range of the thickness include: not less than 5 $\mu$m and not more than 1 mm; and not less than 5 $\mu$m and not more than 500 $\mu$.

The inorganic solid electrolyte has an ion conductivity (e.g., lithium ion conductivity) at 25°C of, for example, preferably not less than $1 \times 10^{-5}$ S/cm, and more preferably not less than $1 \times 10^{-4}$ S/cm. The upper limit of the ion conductivity (e.g., lithium ion conductivity) at 25°C of the inorganic solid electrolyte is, for example, not more than $1 \times 10^{-2}$ S/cm. The lower limits and the upper limits of the ion conductivity (e.g., lithium ion conductivity) of the inorganic solid electrolyte may be combined. As a result of the combination, examples of the range of the ion conductivity include: not less than $1 \times 10^{-5}$ S/cm and not more than $1 \times 10^{-2}$ S/cm; and no less than $1 \times 10^{-4}$ S/cm and not more than $1 \times 10^{-2}$ S/cm.

Examples of a method for measuring the lithium ion conductivity of the inorganic solid electrolyte at 25°C include a method in which an impedance method is used. Specifically, the measurement is carried out as follows.

1. A measurement sample is subjected to compression, sintering, etc. so as to be shaped into a pellet form.
2. A coin-type lithium battery CR2032 (which can be hereinafter referred to as a coin cell) is prepared by sandwiching a measurement sample between two blocking electrodes (e.g., electrodes made of SUS) in a dry argon atmosphere in a glove box. Vapor deposition of gold may be formed on the measurement sample so that an interfacial resistance between the measurement sample and the blocking electrodes is reduced.
3. The obtained coin cell is conditioned in a thermostatic chamber at 25°C for 12 hours.
4. Measurement is carried out by using an impedance measuring device at a desired temperature, for frequencies ranging from 0.1 Hz to 1 MHz and an amplitude of 10 mV. An ion conductivity σ is calculated from the following formula:

$$\sigma \ (S \cdot cm^{-1}) = t \ (cm) \times R \ (\Omega) \ / \ A \ (cm^2)$$

In this formula, R represents the value of an impedance. A represents the area of a sample, and t represents the thickness of the sample.

(Organic solid electrolyte)

The polymer electrolyte is a mixture of a polymer compound having a polarity in the molecule thereof and a lithium salt. Examples of the polymer compound having a polarity in the molecule thereof include a compound having an alkylene oxide structure (ethylene oxide structure, propylene oxide structure, etc.), a polyethylenimine-based polymer, a polyalkylenesulfide-based polymer, and a polyvinylpyrrolidone-based polymer. These polymer compounds are capable of containing a large amount of the lithium salt. This enables an increase in ion conductivity. Examples of the lithium salt include the lithium salts listed as examples in (Ion-conductive material) in the section [1.1.].

The gel electrolyte is, for example, a mixture of a polymer compound having a gelation effect and a nonaqueous electrolyte. The gel electrolyte, which is a polymer compound holding a nonaqueous electrolyte, has moderate plasticity and adhesion and has an ion conductivity close to that of the nonaqueous electrolyte. An all-solid-state secondary battery in which the gel electrolyte is used can therefore provide high charge-discharge efficiency. A mixing ratio of the polymer compound to the nonaqueous electrolyte can be (2:3) to (3:2) from the viewpoint of obtaining a moderate plasticity.

Examples of the polymer compound having a gelation effect include a fluorine resin containing a vinylidene fluoride unit, an acrylic resin containing a (meta)acrylic acid unit (the (meta)acrylic acid unit may have been esterified), and a polyether resin containing a polyalkylene oxide unit. Examples of the fluorine resin containing a vinylidene fluoride unit include polyvinylidene fluoride, a copolymer containing a vinylidene fluoride unit and a hexafluoropropylene unit, and a copolymer containing a vinylidene fluoride unit and a trifluoroethylene unit. In addition, the polymer compound (e.g., a compound having an alkylene oxide structure) used in the polymer electrolyte can be used.

The nonaqueous electrolyte contained in the gel electrolyte contains a lithium salt and a nonaqueous solvent in which the lithium salt is to be dissolved. Examples of the lithium salt include the substances listed as examples in (Ion-conductive material) in the section [1.1.]. Examples of the nonaqueous solvent include cyclic carbonate esters, chain carbonate esters, carboxylic acid esters, cyclic ethers, chain ethers, nitriles, and amides.

[2. All-solid-state secondary battery]

Fig. 1 is a schematic diagram of a laminated body and an all-solid-state secondary battery in accordance with an aspect of the present invention. The all-solid-state secondary battery 100a includes a positive electrode 10, the laminated body 50, and the negative electrode 40. The laminated body 50 is disposed such that the layer 30 containing the heat-resistant resin and the ion-conductive material is positioned between the solid electrolyte layer 20 and the negative electrode 40. In the laminated body 50 illustrated in Fig. 1, the layer 30 containing the heat-resistant resin and the ion-conductive material is formed on one surface of the solid electrolyte layer 20. Thus, the layer 30 containing the heat-resistant resin and the ion-conductive material is not present between the solid electrolyte layer 20 and the positive electrode 10.

**EP 4 099 462 B1**

Fig. 2 is a schematic diagram of a laminated body and an all-solid-state secondary battery in accordance with another aspect of the present invention. In the laminated body 50 illustrated in Fig. 2, the layer 30 containing the heat-resistant resin and the ion-conductive material is formed on both surfaces of the solid electrolyte layer 20. Thus, the layer 30 containing the heat-resistant resin and the ion-conductive material is also present between the solid electrolyte layer 20 and the positive electrode 10.

As used herein, the term "all-solid-state secondary battery" refers to a secondary battery in which a solid electrolyte is used as an electrolyte, i.e., a secondary battery including a solid electrolyte. In an embodiment, the all-solid-state secondary batteries 100a and 100b do not include an electrolytic solution (e.g., aqueous electrolyte or nonaqueous electrolyte).

The all-solid-state secondary batteries 100a and 100b are not limited to any particular form. Examples of the form include a coin-type cell, a laminate-type cell, a cylindrical cell, and a prismatic cell. Although being capable of being charged and discharged repeatedly, the all-solid-state secondary batteries can be used as a primary battery. Specifically, the all-solid-state secondary battery having been charged may be used for one-time-only discharge.

The all-solid-state secondary batteries 100a and 100b are each, for example, an all-solid-state lithium secondary battery or an all-solid-state sodium secondary battery, and are preferably all-solid-state lithium secondary batteries.

The all-solid-state secondary batteries 100a and 100b are not limited to any particular use. For example, the all-solid-state secondary batteries 100a and 100b are used for moving bodies (electric automobiles, electric motorcycles, power-assisted bicycles, trains, etc.), industrial machines (construction machines, forklifts, elevators, etc.), stationary power supplies (solar power generation, wind power generation, UPS, medical devices, etc.), or consumer goods (mobile PC, smartphone, etc.).

[2.1. Positive electrode]

The positive electrode 10 includes, for example, a positive electrode active material layer and a positive electrode current collector.

The positive electrode active material layer contains at least a positive electrode active material. Examples of the positive electrode active material include an oxide-based active material and a sulfur-based active material.

Examples of the oxide-based active material include: a layered rock-salt active material ($LiCoO_2$, $LiMnO_2$, $LiNiO_2$, $LiVO_2$, $LiNi_{1/3}Co_{1/3}Mn_{1/3}O_2$, etc.); a spinel active material ($LiMn_2O_4$, $Li_4Ti_5O_{12}$, $Li(Ni_{0.5}Mn_{1.5})O_4$, etc.); and an olivine active material ($LiFePO_4$, $LiMnPO_4$, $LiNiPO_4$, $LiCoPO_4$, etc.). Examples of the oxide-based active material also include LiMn spinel active material represented by $Li_{1+x}Mn_{2-x-y}M_yO_4$ (M is one or more selected from the group consisting of Al, Mg, Co, Fe, Ni, and Zn, and $0 < x+y < 2$); and lithium titanate.

A coating layer containing a Li ion-conducting oxide may be provided on the surface of the oxide-based active material. Providing the coating layer enables inhibition of a reaction between the oxide-based active material and the solid electrolyte. Examples of the Li ion-conducting oxide include $LiNbO_3$, $Li_4Ti_5O_{12}$, and $Li_3PO_4$. The coating layer has a thickness whose lower limit can be, for example, not less than 0.1 nm or not less than 1 nm. The upper limit of the thickness of the coating layer can be, for example, not more than 100 nm or not more than 20 nm. The ratio of coverage, by the coating layer, of the surface of the oxide-based active material is, for example, not less than 70%, or not less than 90%.

The sulfur-based active material contains at least the sulfur element. The sulfur-based active material optionally contains the Li element. Examples of the sulfur-based active material include elemental sulfur, lithium sulfide ($Li_2S$), and lithium polysulfide ($Li_2S_x$; $2 \leq x \leq 8$).

The positive electrode active material layer may contain, as needed, one or more selected from the group consisting of an inorganic solid electrolyte, an electrically conductive material, and a binder. The inorganic solid electrolyte can be, for example, the inorganic solid electrolyte described in the section [1.2.]. Examples of the electrically conductive material include acetylene black, Ketjenblack, and a carbon fiber. Examples of the binder include: a rubber binder (butylene rubber (BR), styrene butadiene rubber (SBR), etc.); and a fluoride binder (polyvinylidene fluoride (PVDF), etc.).

The positive electrode active material layer has a thickness whose lower limit is, for example, not less than 0.1 $\mu$m. The upper limit of the thickness of the positive electrode active material layer is, for example, not more than 300 $\mu$m or not more than 100 $\mu$m.

Examples of a material of the positive electrode current collector include stainless steel, aluminum, nickel, iron, titanium, and carbon. Examples of the form of the positive electrode current collector include a foil form and a plate form. The positive electrode current collector has a thickness whose lower limit is, for example, not less than 0.1 $\mu$m or not less than 1 $\mu$m. The upper limit of the thickness of the positive electrode current collector is, for example, not more than 1 mm or not more than 100 $\mu$m.

[2.2. Negative electrode]

The negative electrode 40 includes, for example, a negative electrode active material layer and a negative electrode current collector.

The negative electrode active material layer contains at least a negative electrode active material. Examples of the negative electrode active material include a lithium metal, a lithium alloy, a metal capable of being alloyed with lithium, a carbon-based material, and an oxide-based material.

Examples of the carbon-based material include graphite, amorphous carbon, a carbon nanotube, and graphene. Examples of the oxide-based material include $Li_4Ti_5O_{12}$ (LTO) and $TiO_2$.

The negative electrode active material layer may contain, as needed, one or more selected from the group consisting of an inorganic solid electrolyte, an electrically conductive material, and a binder. These materials are, for example, the inorganic solid electrolyte, the electrically conductive material, and the binder that can be contained in the positive electrode active material layer and that are listed as examples in the section [3.1.].

The negative electrode active material layer has a thickness whose lower limit is, for example, not less than 0.1 $\mu$m. The upper limit of the thickness of the negative electrode active material layer is, for example, not more than 300 $\mu$m or not more than 100 $\mu$m.

Examples of a material of the negative electrode current collector include a material that is not capable of being alloyed with Li. More specific examples of such a material include stainless steel, copper, nickel, and carbon. Examples of the form of the negative electrode current collector include a foil form and a plate form. The negative electrode current collector has a thickness whose lower limit is, for example, not less than 0.1 $\mu$m or not less than 1 $\mu$m. The upper limit of the thickness of the negative electrode current collector is, for example, not more than 1 mm or not more than 100 $\mu$m.

[3. Method for producing all-solid-state secondary battery]

An aspect of the present invention is a method for producing an all-solid-state secondary battery, the method including the step of disposing, between the solid electrolyte layer 20 and the negative electrode 40, the layer 30 containing the heat-resistant resin and the ion-conductive material. In an embodiment, the layer 30 containing the heat-resistant resin and the ion-conductive material is a short circuit prevention film.

[3.1. Positional arrangement of layer containing heat-resistant resin and ion-conductive material]

Examples of a method for disposing the layer 30 containing the heat-resistant resin and the ion-conductive material between the solid electrolyte layer 20 and the negative electrode 40 include methods described below.
($\alpha$) A method of preparing the layer 30 (short circuit prevention film) containing the heat-resistant resin and the ion-conductive material and then disposing the layer 30 between the solid electrolyte layer 20 and the negative electrode 40. For example, a method of placing the layer 30 (short circuit prevention film) containing the heat-resistant resin and the ion-conductive material on the solid electrolyte layer 20 or the negative electrode 40.

($\beta$) A method of disposing a porous base material containing the heat-resistant resin (or a porous base material containing the heat-resistant resin and another substance) between the solid electrolyte layer 20 and the negative electrode 40, and then preparing the layer 30 containing the heat-resistant resin and the ion-conductive material. For example, a method of placing a porous base material containing the heat-resistant resin on the solid electrolyte layer 20 or the negative electrode 40, and then impregnating the porous base material with the ion-conductive material or causing the porous base material to support the ion-conductive material.

($\gamma$) A method of applying a solution containing the heat-resistant resin and the ion-conductive material on the solid electrolyte layer 20 or the negative electrode 40 to prepare the layer 30 containing the heat-resistant resin and the ion-conductive material. For example, a method of (i) preparing a solution containing the heat-resistant resin, the ion-conductive material, and a solvent, (ii) applying the solution on the solid electrolyte layer 20 or the negative electrode 40, and (iii) removing the solvent by drying.

($\delta$) A method of disposing powder of a mixture containing the heat-resistant resin and the ion-conductive material on the solid electrolyte layer 20 or the negative electrode 40 and carrying out molding to prepare the layer 30 containing the heat-resistant resin and the ion-conductive material. For example, a method of (i) preparing powder of a mixture containing the heat-resistant resin and the ion-conductive material, (ii) disposing the powder on the solid electrolyte layer 20 or the negative electrode 40, and (iii) carrying out press-molding.

[3.2. Method for producing all-solid-state secondary battery 100a]

By carrying out any of the methods ($\alpha$) to ($\delta$), it is possible to prepare a laminated body 50 in which the solid electrolyte layer 20, the layer 30 containing the heat-resistant resin and the ion-conductive material, and the negative electrode 40 are formed on top of each other in this order and which includes only one layer 30 containing the heat-resistant resin and the ion-conductive material. By further forming the positive electrode 10 on the solid electrolyte layer 20 of the laminated body 50, it is possible to produce a laminated body (all-solid-state secondary battery 100a) in which the positive electrode 10, the solid electrolyte layer 20, the layer 30 containing the heat-resistant resin and the ion-conductive material, and the negative electrode 40 are formed on top of each other in this order.

[3.3. Method for producing all-solid-state secondary battery 100b]

By carrying out any of the methods ($\alpha$) to ($\delta$), it is possible to prepare a laminated body 50 in which the solid electrolyte layer 20, the layer 30 containing the heat-resistant resin and the ion-conductive material, and the negative electrode 40 are formed on top of each other in this order and which includes only one layer 30 containing the heat-resistant resin and the ion-conductive material. By further forming the layer 30 containing the heat-resistant resin and the ion-conductive material and the positive electrode 10 on the solid electrolyte layer 20 of the laminated body 50, it is possible to produce a laminated body (all-solid-state secondary battery 100b) in which the positive electrode 10, the layer 30 containing the heat-resistant resin and the ion-conductive material, the solid electrolyte layer 20, the layer 30 containing the heat-resistant resin and the ion-conductive material, and the negative electrode 40 are formed on top of each other in this order.

The solid electrolyte layer 20 or the negative electrode 40 may each be a precursor. Specifically, the positive electrode 10, the solid electrolyte layer 20, or the negative electrode 40 may be formed by subjecting precursors thereof to heating, pressure-bonding, etc. after carrying out the above methods ($\alpha$) to ($\delta$). The precursor is a compound or a mixture that becomes the positive electrode 10, the solid electrolyte layer 20, or the negative electrode 40 after undergoing heating, pressure-bonding, etc.

In the above production methods, the positive electrode 10, the solid electrolyte layer 20, and the negative electrode 40 may be produced by a publicly known method. For example, these layers can be produced by a wet method that includes drying a raw material slurry or by a powder molding method of pressing raw material powder. When the solid electrolyte layer 20 is an organic solid electrolyte layer, the solid electrolyte layer 20 can be produced by a polymerization method or the like which is publicly known.

The all-solid-state secondary batteries 100a and 100b may include a component such as a housing for holding the laminated body and a lead for drawing an electric current from an electrode, although the component is not illustrated in the drawings. As a method for producing and assembling these members to build a battery product, a conventionally, publicly known method can be used.

The contents described in each of the above items can be employed as appropriate in another item. The present invention is not limited to the above-described embodiments, but may be altered in various ways by a skilled person within the scope of the claims. The present invention also encompasses, in its technical scope, any embodiment derived by combining technical means disclosed in differing embodiments.

All of the academic and patent literatures described herein are employed herein as references.

The present invention will be described in more detail below by discussing Examples. However, the present invention is not limited only to the Examples below. Examples

A dendrite resistance test was conducted to examine a dendrite reduction effect and a voltage stabilization effect brought about by use of a layer (short circuit prevention film) containing a heat-resistant resin and an ion-conductive material. In the test, a coin-type lithium battery CR2032 was used as a cell to be evaluated. Specifically, layers were formed on top of each other in an order indicated below to prepare a laminated body under test. An electric current was passed through this laminated body at a density of 0.10 mA/cm$^2$, and a change in voltage over time was observed. Note that this electric current density is a limiting current density obtained when a deposition-dissolution cycle test is carried out with use of a pellet of an LLZN sintered body ($Li_{6.75}La_3Zr_{1.75}Nb_{0.25}O_{12}$, pellet thickness: 500 $\mu$m) available from TOSHIMA Manufacturing Co., Ltd. The electric current density is a limiting current density obtained when the deposition-dissolution cycle test is carried out without using a short circuit prevention film. The test was conducted at a temperature of 60°C.

· Stainless steel plate, thickness: 500 $\mu$m, diameter: 15.5 mm
· Metallic lithium foil on a dissolution side, thickness: 500 $\mu$m, diameter: 13 mm
Solid electrolyte layer (a sintered body of $Li_{6.75}La_3Zr_{1.75}Nb_{0.25}O_{12}$, thickness: 500 $\mu$m, diameter: 15 mm, ion conductivity at 25°C: $1,0 \times 10^{-5}$ S/cm, available from TOSHIMA Manufacturing Co., Ltd.)
· Short circuit prevention film, diameter: 16 mm · Metallic lithium foil on a deposition side, thickness: 500 $\mu$m, diameter: 13 mm.

The ion conductivity of the short circuit prevention film, or the ion-conductive material, was measured by using an impedance method. Specifically, the measurement was carried out as follows.

1. A coin-type lithium battery CR2032 (a coin cell) was prepared by sandwiching a measurement sample between two blocking electrodes (e.g., electrodes made of SUS) in a dry argon atmosphere in a glove box.

2. The obtained coin cell was conditioned in a thermostatic chamber at 60°C for 12 hours.

3. Measurement was carried out by using an impedance measuring device at 60°C, for frequencies ranging from 0.1 Hz to 1 MHz and an amplitude of 10 mV. An ion conductivity $\sigma$ was calculated from the following formula:

$$\sigma \ (S \cdot cm^{-1}) = t \ (cm) \times R \ (\Omega) \ / \ A \ (cm^2)$$

In this formula, R represents the value of an impedance. A represents the area of a sample, and t represents the thickness of the sample.

The ion conductivity of the solid electrolyte was measured in a similar manner to the above method, except that the temperature was changed to 25°C.

[Example 1-1]

A polymer electrolyte was used as the ion-conductive material. Specifically, LiTFSI (available from Sigma Aldrich) was added to a 10 weight% aqueous solution of polyethylene oxide (available from Sigma Aldrich, MW: 200,000). A mixing ratio was adjusted such that Li / ethylene oxide repeating unit = 1/24 in terms of molar ratio. Then, a mixture thus obtained was heated to 80°C while being stirred, so that LiTFSI was dissolved. An aramid-polyethylene laminated film, in which an aramid and polyethylene formed a laminated body, was impregnated with the resultant aqueous solution and dried to obtain a short circuit prevention film 1-1. The short circuit prevention film 1-1 had a thickness of 28 $\mu$m. The short circuit prevention film 1-1 had a polymer electrolyte content of 73 weight%. The short circuit prevention film 1-1 had an ion conductivity at 60°C of $2.3 \times 10^{-5}$ S/cm.

The aramid-polyethylene laminated film used was a laminated film including a polyethylene film (thickness: 12.5 $\mu$m) and a layer (thickness: 4.0 $\mu$m) containing an aramid resin (poly(paraphenylene terephthalamide)) and alumina at a weight ratio of 1:2. The short circuit prevention film 1-1 was disposed such that an aramid resin layer faced the metallic lithium foil on the deposition side.

[Comparative Example 1-1]

The dendrite resistance test was conducted without use of the short circuit prevention film.

[Comparative Example 1-2]

A ceramic-polyethylene laminated film, in which ceramic and polyethylene formed a laminated body, was impregnated with an aqueous solution, which had been prepared in a similar manner to Example 1, and was dried to obtain a comparative short circuit prevention film 1-2. The ceramic-polyethylene laminated film used was a laminated film including a polyethylene film (thickness: 12.5 $\mu$m) and a layer (thickness: 2.3 $\mu$m) of ceramic (alumina : an acrylic emulsion binder : sodium polyacrylate = 94 weight% : 5 weight% : 1 weight%). The comparative short circuit prevention film was disposed such that a ceramic layer faced a metallic lithium foil on the deposition side. The comparative short circuit prevention film 1-2 had a thickness of 41 $\mu$m. The comparative short circuit prevention film 1-2 had a polymer electrolyte content of 79 weight%. The comparative short circuit prevention film 1-2 had an ion conductivity at 60°C of $1.1 \times 10^{-4}$ S/cm.

[Comparative Example 1-3]

A single-layered film of polyethylene was impregnated with an aqueous solution, which had been prepared in a similar manner to Example 1, and was dried to obtain a comparative short circuit prevention film 1-3. The comparative short circuit prevention film 1-3 had a thickness of 45 $\mu$m. The comparative short circuit prevention film 1-1 had a polymer electrolyte content of 88 weight%. The comparative short circuit prevention film 1-3 had an ion conductivity at 60°C of $6.1 \times 10^{-5}$ S/cm.

[Comparative Example 1-4]

From an aqueous solution prepared in a similar manner to Example 1, water serving as a solvent was removed, and a film was formed to obtain a comparative short circuit prevention film 1-4 consisting only of a polymer electrolyte. The comparative short circuit prevention film 1-4 had a thickness of 85 $\mu$m. The comparative short circuit prevention film 1-4 had a polymer electrolyte content of 100 weight%. The comparative short circuit prevention film 1-4 had an ion conductivity at 60°C of $2.3 \times 10^{-4}$ S/cm.

[Comparative Example 1-5]

The aramid-polyethylene laminated film used in Example 1-1 was used as it was.

[Results]

Results of the test are shown in Figure 3. As indicated in Fig. 3, for 20 hours or more (until the end of the test), the laminated body under test in accordance with Example 1-1 had no short circuit caused by the formation of a dendrite and exhibited stable voltage behavior. In contrast, in Comparative Example 1-1, the voltage became 0 immediately after the start of the test. This is considered to be due to the occurrence of a short circuit between the electrodes caused by a grown dendrite, which was caused by the absence of the short circuit prevention film. In Comparative Example 1-2, the voltage repeatedly increased and decreased and did not behave stably at all. This is considered to be due to repeated occurrence of a micro short between the electrodes caused by a grown dendrite. The voltage in Comparative Example 1-3 also behaved unstably in comparison to the Example. In Comparative Example 1-4, the voltage rapidly decreased. This is considered to be due to an excessively high internal resistance. In Comparative Example 1-5, the internal resistance was so high that measurement was impossible (no measurement data is illustrated in Fig. 3 due to the unsuccessful measurement).

[Example 2-1]

An ionic liquid was used as the ion-conductive material. As the ionic liquid, [Li(G4)][FSI], which is a mixture of tetraglyme (G4) and lithium bis(fluorosulfonyl)imide (LiFSI), was used. The mixing ratio (molar ratio) was G4 : LiFSI = 1 : 1. The aramid-polyethylene laminated film used in Example 1 was impregnated with 50 mL of this ionic liquid to obtain a short circuit prevention film 2-1. The short circuit prevention film 2-1 had a thickness of 17 $\mu$m. The short circuit prevention film was disposed such that an aramid resin layer faced the metallic lithium foil on the deposition side. The short circuit prevention film 2-1 had an ion conductivity at 60°C of $1.4 \times 10^{-4}$ S/cm.

[Example 2-2]

The short circuit prevention film 1-1 prepared in Example 1-1 was impregnated with 50 mL of the ionic liquid prepared in Example 2-1 to obtain a short circuit prevention film 2-2. That is, the short circuit prevention film 2-2 contained both an ionic liquid and a polymer electrolyte as the ion-conductive material. The short circuit prevention film 2-1 had a thickness of 55 $\mu$m. The short circuit prevention film was disposed such that an aramid resin layer faced the metallic lithium foil on the deposition side.

[Comparative Example 2-1]

The dendrite resistance test was conducted without use of the short circuit prevention film.

[Comparative Example 2-2]

Without use of the short circuit prevention film, the solid electrolyte layer was impregnated with an ionic liquid, and the dendrite resistance test was conducted.

[Results]

Results of the test are shown in Figure 4. As indicated in Fig. 4, for nearly 50 hours (until the end of the test), the laminated body under test in accordance with Example 2-1 and the laminated body under test in accordance with Example 2-2 had no short circuit caused by the formation of a dendrite and exhibited stable voltage behavior. Between the Examples, the voltage behavior exhibited by Example 2-1 was more stable than that of the other. In contrast, in Comparative Example 1-1, the voltage became 0 immediately after the start of the test. This is considered to be due to the occurrence of a short circuit between the electrodes caused by a grown dendrite, which was caused by the absence of the short circuit prevention film. In Comparative Example 1-2, the voltage gradually decreased. This is considered to be due to an increase in internal resistance over time.

[Example 3-1]

A short circuit prevention film 3-1 was prepared in accordance with a similar procedure to Example 1-1, except that the type of laminated film was changed. Specifically, as a film to be impregnated with a polymer electrolyte, a laminated film including the following (i) and (ii) was used: (i) a polyethylene film (thickness: 12.5 $\mu$m); and (ii) a layer (thickness: 4.0 $\mu$m) containing an aramid resin (poly(paraphenylene terephthalamide)), an aromatic polyester (glass-transition temperature: approximately 240°C), and alumina at a weight ratio of 3:2:10.

The short circuit prevention film 3-1 had a thickness of 69 $\mu$m. The short circuit prevention film 3-1 had a polymer electrolyte content of 90 weight%. The short circuit prevention film 3-1 was disposed such that a heat-resistant resin layer faced the metallic lithium foil on the deposition side.

[Example 3-2]

A short circuit prevention film 3-2 was prepared in accordance with a similar procedure to Example 2-1, except that the type of laminated film was changed. Specifically, as a film to be impregnated with an ionic liquid, a laminated film including the following (i) and (ii) was used: (i) a polyethylene film (thickness: 12.5 $\mu$m); and (ii) a layer (thickness: 4.0 $\mu$m) containing an aramid resin (poly(paraphenylene terephthalamide)), an aromatic polyester (glass-transition temperature: approximately 240°C), and alumina at a weight ratio of 3:2:10.

The short circuit prevention film 3-2 had a thickness of 17 $\mu$m. The short circuit prevention film 3-2 was disposed such that a heat-resistant resin layer faced the metallic lithium foil on the deposition side.

[Results]

A result of the test of Example 3-1 is shown in Figure 5. As indicated in Fig. 5, for 10 hours, the laminated body under test in accordance with Example 3-1 had no short circuit caused by the formation of a dendrite and exhibited stable voltage behavior.

A result of the test of Example 3-2 is shown in Figure 6. As indicated in Fig. 6, for 50 hours (until the end of the test), the laminated body under test in accordance with Example 3-2 had no short circuit caused by the formation of a dendrite and exhibited stable voltage behavior.

Industrial Applicability

The present invention is usable in all-solid-state secondary batteries and the like.

Reference Signs List

10: Positive electrode
20: Solid electrolyte layer
30: Layer (short circuit prevention film) containing heat-resistant resin and ion-conductive material
40: Negative electrode
50: Laminated body
100a: All-solid-state secondary battery
100b: All-solid-state secondary battery

**Claims**

1. A laminated body (50), comprising:

   a solid electrolyte layer (20); and
   a layer (30) containing a heat-resistant resin and an ion-conductive material,
   the solid electrolyte layer and the layer containing the heat-resistant resin and the ion-conductive material being adjacent to each other.

2. The laminated body as set forth in claim 1, wherein the heat-resistant resin has a glass-transition temperature of not less than 200°C.

3. The laminated body as set forth in claim 1 or 2, wherein the ion-conductive material is at least one selected from the group consisting of an ionic liquid, a mixture of an ionic liquid and a lithium salt, and a polymer electrolyte.

**4.** The laminated body as set forth in any one of claims 1 through 3, wherein a solid electrolyte contained in the solid electrolyte layer is an inorganic solid electrolyte.

**5.** The laminated body as set forth in claim 4, wherein the inorganic solid electrolyte is an oxide-based solid electrolyte or a sulfide-based solid electrolyte.

**6.** An all-solid-state secondary battery (100a, 100b), comprising:

a positive electrode (10);
a laminated body (50) recited in any one of claims 1 through 5; and
a negative electrode (20),
the layer containing the heat-resistant resin and the ion-conductive material being disposed between the negative electrode and the solid electrolyte layer.

**7.** A method for producing an all-solid-state secondary battery recited in claim 6,
said method comprising the step of:
disposing, between the solid electrolyte layer and the negative electrode, the layer containing the heat-resistant resin and the ion-conductive material.

**8.** A method for preventing a short circuit in an all-solid-state secondary battery,
said method comprising the step of:
disposing, between a positive electrode and a negative electrode, a laminated body recited in any one of claims 1 through 5.

**Patentansprüche**

**1.** Laminierter Körper (50), mit:

einer Festelektrolytschicht (20); und
einer Schicht (30), die ein wärmebeständiges Harz und ein ionenleitendes Material enthält,
wobei die Festelektrolytschicht und die Schicht, die das wärmebeständige Harz und das ionenleitende Material enthält, einander benachbart sind.

**2.** Laminierter Körper nach Anspruch 1, wobei das wärmebeständige Harz eine Glasübergangstemperatur von nicht weniger als 200°C aufweist.

**3.** Laminierter Körper nach Anspruch 1 oder 2, wobei das ionenleitende Material mindestens ein Material ist, das ausgewählt ist aus der Gruppe bestehend aus einer ionischen Flüssigkeit, einer Mischung aus einer ionischen Flüssigkeit und einem Lithiumsalz, und einem Polymerelektrolyt.

**4.** Laminierter Körper nach einem der Ansprüche 1 bis 3,
wobei ein in der Festelektrolytschicht enthaltener Festelektrolyt ein anorganischer Festelektrolyt ist.

**5.** Laminierter Körper nach Anspruch 4, wobei der anorganische Festelektrolyt ein Festelektrolyt auf Oxidbasis oder ein Festelektrolyt auf Sulfidbasis ist.

**6.** Festkörper-Sekundärbatterie (100a, 100b), mit:

einer positiven Elektrode (10);
einem laminierten Körper (50) nach einem der Ansprüche 1 bis 5; und
einer negativen Elektrode (20),
wobei die Schicht, die das wärmebeständige Harz und das ionenleitende Material enthält, zwischen der negativen Elektrode und der Festelektrolytschicht angeordnet ist.

**7.** Verfahren zum Herstellen einer Festkörper-Sekundärbatterie nach Anspruch 6,
wobei das Verfahren den Schritt aufweist:
Anordnen der Schicht, die das wärmebeständige Harz und das ionenleitende Material enthält, zwischen der Festelektrolytschicht und der negativen Elektrode.

8. Verfahren zum Verhindern eines Kurzschlusses in einer Festkörper-Sekundärbatterie,
wobei das Verfahren den Schritt aufweist:
Anordnen eines laminierten Körpers nach einem der Ansprüche 1 bis 5 zwischen einer positiven Elektrode und einer negativen Elektrode.

**Revendications**

1. Corps stratifié (50) comprenant :

   une couche d'électrolyte solide (20) ; et
   une couche (30) contenant une résine résistante à la chaleur et un matériau conducteur d'ions,
   la couche d'électrolyte solide et la couche contenant la résine résistante à la chaleur et le matériau conducteur d'ions étant adjacentes l'une à l'autre.

2. Corps stratifié selon la revendication 1, dans lequel la résine résistante à la chaleur a une température de transition vitreuse non inférieure à 200°C.

3. Corps stratifié selon la revendication 1 ou 2, dans lequel le matériau conducteur d'ions est au moins l'un choisi dans le groupe constitué par un liquide ionique, un mélange d'un liquide ionique et d'un sel de lithium, et un électrolyte polymère.

4. Corps stratifié selon l'une quelconque des revendications 1 à 3, dans lequel un électrolyte solide contenu dans la couche d'électrolyte solide est un électrolyte solide inorganique.

5. Corps stratifié selon la revendication 4, dans lequel l'électrolyte solide inorganique est un électrolyte solide à base d'oxyde ou un électrolyte solide à base de sulfure.

6. Batterie rechargeable entièrement solide (100a, 100b), comprenant :

   une électrode positive (10) ;
   un corps stratifié (50) défini dans l'une quelconque des revendications 1 à 5 ; et
   une électrode négative (20),
   la couche contenant la résine résistante à la chaleur et le matériau conducteur d'ions étant disposée entre l'électrode négative et la couche d'électrolyte solide.

7. Procédé pour produire une batterie rechargeable entièrement solide définie dans la revendication 6, ledit procédé comprenant l'étape de :
   disposition, entre la couche d'électrolyte solide et l'électrode négative, de la couche contenant la résine résistante à la chaleur et le matériau conducteur d'ions.

8. Procédé pour empêcher un court-circuit dans une batterie rechargeable entièrement solide, ledit procédé comprenant l'étape de :
   disposition, entre une électrode positive et une électrode négative, d'un corps stratifié défini dans l'une quelconque des revendications 1 à 5.

FIG. 1

100a

| | 10 |
| | 20 ⎤ |
| | 30 ⎦ 50 |
| | 40 |

FIG. 2

100b

| | 10 |
| | 30 ⎤ |
| | 20 ⎬ 50 |
| | 30 ⎦ |
| | 40 |

FIG. 3

## FIG. 4

EP 4 099 462 B1

FIG. 5

FIG. 6

**EP 4 099 462 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019199394 A
- JP 2019102301 A
- WO 2017099248 A1